# EUROPEAN PATENT APPLICATION

(11) **EP 1 717 426 A2**
(43) Date of publication of application: **02.11.2006**
(21) Application number: 06008552.9
(22) Date of filing: 25.04.2006
(51) Int. Cl.: F02C 6/12

(54) **Supercharger**

(30) Priority: 28.04.2005 JP 2005132928; 28.04.2005 JP 2005132948
(71) Applicant: HKS CO., LTD., Fujinomiya-shi Shizuoka (JP)
(72) Inventor: Takahashi, Kokichi, c/o HKS Co., LTD., Fujinomiya-shi, Shizuoka (JP)
(74) Representative: Grünecker, Kinkeldey, Stockmair & Schwanhäusser Anwaltssozietät

(57) **Abstract**

A supercharger has a step-up gear including an outer wheel which rotates with an input shaft and is eccentric from an output shaft, and a plurality of intermediate rollers to which are disposed in a ring-shaped space, of which the width in the diameter direction of the output shaft between the output shaft and the outer wheel is not constant in the circumferential direction of the output shaft. At least one intermediate roller is a movable roller which can moves in the circumferential surface and the radius direction of the output shaft. The outer wheel is closely fitted onto the outer circumferences of all the intermediate rollers and the inner circumferential surface of the outer wheel is brought into elastic contact with the outer circumferential surfaces of all the intermediate rollers.

## Description

The present invention relates to a supercharger.

As disclosed in Japanese Patent Application National Publication Laid-open No.11-502596 (Patent Document 1) and Japanese Patent Application Laid-open No. 2003-201850 (Patent Document 2), there is known a supercharger in which an input shaft rotates with the rotation of a crank shaft of an engine, the rotation of the input shaft is enhanced with a step-up gear, and the enhanced rotation is delivered to an output shaft, thereby carrying out the supercharge of sucked air with the rotation of an impeller coupled to the output shaft.
(A) The supercharger described in Patent Document 1 employs a planetary frictional roller mechanism as the step-up gear and includes a flexible outer ring rotating with the input shaft, a frictional roller such as a sun shaft coupled to the output shaft, and a plurality of planetary rollers interposed between the output ring and the frictional roller. Here, the planetary roller and the frictional roller come in tight contact with each other by the use of elastic deformation of the outer ring.
   In the supercharger described in Patent Document 1, the tight contact force applied from the outer ring to the planetary roller and the frictional roller should be necessarily strong so as to prevent slip of the step-up gear during high-speed rotation. However, when the tight contact force is strong, the unnecessary tight contact force is always applied to the planetary roller and the frictional roller even during low-speed rotation and thus drive loss thereof is great, thereby deteriorating durability. In the supercharger described in Patent Document 1, when an input torque greater than a predetermined delivery torque is applied, slip occurs between the planetary roller and the outer ring.
   In the supercharger described in Patent Document 2, the step-up gear includes as the step-up gear an outer wheel which rotates with the input shaft and is disposed eccentric from the output shaft, and a plurality of intermediate rollers. A plurality of intermediate rollers are disposed in a ring-shaped space where the width in the diameter direction of the output shaft between a driven cylindrical surface which is the outer circumferential surface of the output shaft and a driving cylindrical surface which is the inner circumferential surface of the outer wheel, is not constant in the circumferential direction of the output shaft and the outer circumferential surfaces. Each of the outer circumferential surfaces serves as a power-delivering cylindrical surfaces coming in frictional contact with the driven cylindrical surface and the driving cylindrical surface. At least one of the intermediate rollers is a movable roller which can move in the circumferential direction and the radius direction of the output shaft. By pressing the movable roller by the use of a coil spring in the direction in which the width of the ring-shaped space is decreased, the outer circumferential surface of the movable roller is pressed on the outer circumferential surface of the output shaft and the inner circumferential surface of the outer wheel.
   In the supercharger described in Patent Document 2, since the coil spring for strongly pressing the movable roller on the output shaft and the outer wheel is used, the number of parts is increased and an installation space for the coil spring is necessary. In addition, it is difficult to apply a heavy load with the coil spring.
(B) In the supercharger described in Patent Document 1, both ends of a spindle of each planetary roller are supported by a bearing hole formed in the opposed frames, and the bearing holes are all closed. For this reason, it is difficult to coaxially form the bearing holes with a single tool in the state that both frames are integrally fitted thereto. When the bearing holes are formed in the separated frames, the bearing holes formed in the frames have bad concentricity. It is therefore not possible to secure parallelism between the respective planetary rollers and the outer ring or the frictional roller, and to secure parallelism between the planetary rollers. Accordingly, undesirable mechanical loss and reduction in life time of the step-up gear become noticeable.
   In the supercharger disclosed in Patent Document 2, a structure for supporting the intermediate rollers with respect to the housing of the step-gear is not specifically mentioned.

An object of the present invention is to provide a supercharger which does not cause slip during high-speed rotation and driving loss during low-speed rotation having a simple structure.

Another object of the present invention is to accomplish enhancement in mechanical efficiency and life time of a step-up gear by securing in a simple manner parallelism between intermediate rollers and an outer wheel or an output shaft, and parallelism between the intermediate rollers in the step-up gear of a supercharger.

The present invention relates to a supercharger comprising a step-up gear in which rotation of an input shaft is enhanced with the step-up gear and delivered to an output shaft, and an impeller is disposed on the output shaft. The step-up gear comprises an outer wheel which rotates with the input shaft and is eccentric from the output shaft and a plurality of intermediate rollers. A plurality of intermediate rollers are disposed in a ring-shaped space where the width in the diameter direction of the output shaft between a driven cylindrical surface which is the outer circumferential surface of the output shaft and a driving cylindrical surface which is the inner circumferential surface of the outer wheel, is not constant in the circumferential direction of the output shaft. Each of the outer circumferential surfaces serves as a power-delivering cylindrical surfaces coming in frictional contact with the driven cylindrical surface and the driving cylindrical surface. At least one of the intermediate rollers is a movable roller which can move in the circumferential surface and the radius direction of the output shaft. The outer wheel is closely fitted onto the outer circumferences of all the intermediate rollers. The inner circumferential surface of the outer wheel is brought into elastic contact with the outer circumferential surfaces of all the intermediate rollers.

The present invention relates to a supercharger comprising a step-up gear in which rotation of an input shaft is enhanced with the step-up gear and delivered to an output shaft, and an impeller is disposed on the output shaft. The step-up gear comprises an outer wheel which rotates with the input shaft and a plurality of intermediate rollers. A plurality of intermediate rollers are disposed in a ring-shaped space between a driven cylindrical surface which is the outer circumferential surface of the output shaft and a driving cylindrical surface which is the inner circumferential surface of the outer wheel. Each of the outer circumferential surfaces serves as a power-delivering cylindrical surfaces coming in frictional contact with the driven cylindrical surface and the driving cylindrical surface. One end of the respective intermediate rollers is supported by a bearing hole formed in a housing of the step-up gear, and the other end is supported by a bearing hole formed in a carrier which is fitted into the housing. The carrier is fixed to the housing by the use of a positioning member. The bearing holes of the carrier and the bearing holes of the housing are concentrically formed, and the bearing holes of at least one side are through-holes.

The present invention will be more fully understood from the detailed description given below and from the accompanying drawings which should not be taken to be a limitation on the invention, but are for explanation and understanding only.
The drawings:
FIG. 1 is a cross-sectional view illustrating a super charger according to a first embodiment;
FIG. 2 is a cross-sectional view taken along Line II-II of FIG. 1;
FIG. 3 is a cross-sectional view taken along Line III-III of FIG. 1;
FIG. 4 is a perspective view illustrating an assembly structure of an input shaft, a drive member, and an outer wheel;
FIGS. 5A and 5B are diagrams illustrating the assembly structure of the input shaft, the drive member, and the outer wheel, where FIG. 5A is a plan view and FIG. 5B is a cross-sectional view taken along Line B-B of FIG. 5A;
FIGS. 6A to 6C are diagrams illustrating the drive member, where FIG. 6A is a plan view, FIG. 6B is a lateral view, and FIG. 6C is a cross-sectional view;
FIGS. 7A to 7C are diagrams illustrating an assembly structure of a housing and a carrier, where FIG. 7A is a plan view, FIG. 7B is a cross-sectional view taken along Line B-B of FIG. 7A, and FIG. 7C is a cross-sectional view taken along Line C-C of FIG. 7A;
FIG. 8 is a cross-sectional view illustrating a supercharger according to a second embodiment; and
FIG. 9 is a cross-sectional view illustrating a supercharger according to a third embodiment.

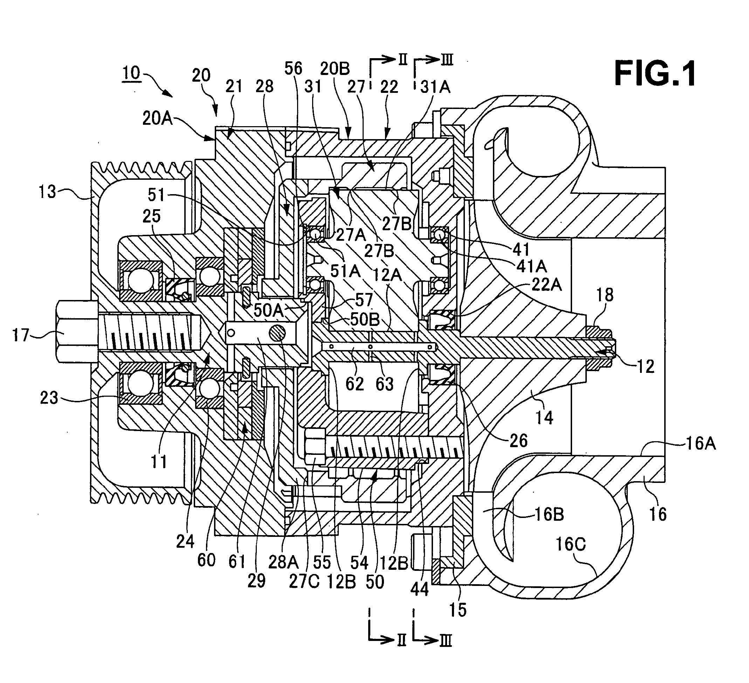

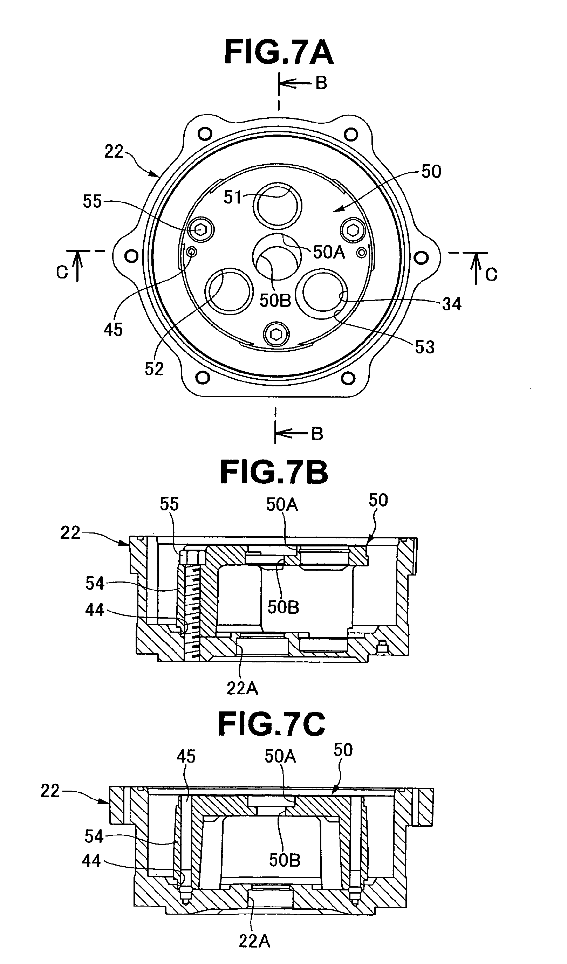

### (First Embodiment) (see FIGS. 1 to 7C)

A vehicle supercharger 10 shown in FIG. 1 serves to enhance the rotation of an input shaft 11 with a step-up gear 20 and to deliver the enhanced rotation to an output shaft 12. A pulley 13 which is driven by an engine output is fixed to the input shaft 11 and an impeller 14 is provided to the output shaft 12.

In the supercharger 10, a compressor housing 16 is faucet-connected to a center plate 15. The compressor housing 16 accommodates the impeller 14 and has a suction port 16A, a supply passage 16B, and a scroll 16C.

The step-up gear 20 is of a frictional roller type using a wedge action. The housing thereof is formed by a front housing 21 and a rear housing 22. The rear housing 22 is faucet-connected to the center plate 15, and the front housing 21 is faucet-connected to the rear housing 22 with bolts (not shown).

In the step-up gear 20, the input shaft 11 is supported by the front housing 21 through bearings 23 and 24. An oil seal 25 is disposed at the positions where the input shaft is inserted into the bearings 23 and 24 of the front housing 21 seals the surroundings of the input shaft 11, and the pulley 13 is fixed to an end of the input shaft 11 protruded from the front housing 11 with a bolt (or a nut) 17. In the step-up gear 20, an oil seal 26 disposed in the rear housing 22 seals the surroundings of the output shaft 12, and the impeller 14 is fixed to an end of the output shaft 12 protruded from the rear housing 22 with a nut 18.

The step-up gear 20 has an outer wheel 27 which rotates with the input shaft 11. In the first embodiment of the present invention, the input shaft 11 and the outer wheel 27 are disposed substantially concentric with each other, and the input shaft 11 and the outer wheel 27 are eccentric from the output shaft 12. The input shaft 11 and the outer wheel 27 are connected to each other with a drive member 28 as described later.

In the step-up gear 20, three intermediate rollers 31, 32, and 33 are disposed in a ring-shaped space between a driven cylindrical surface 12A, which is the outer circumferential surface of the output shaft 12, and a driving cylindrical surface 27A (convex claw portions 27B to be described later) which is the inner circumferential surface of the outer wheel 27. The outer circumferential surfaces of the three intermediate rollers 31, 32, and 33 serves as power-delivering cylindrical surfaces 31A, 32A, and 33A coming in frictional contact with the driving cylindrical surface 12A of the output shaft 12 and the driving cylindrical surface 27A of the outer wheel 27.

In the first embodiment of the present invention, one intermediate roller 31 among three intermediate rollers 31, 32, and 33 has a diameter greater than those of the other intermediate rollers 32 and 33. Accordingly, when the ring-shaped space is formed between the driven cylindrical surface 12A of the output shaft 12 and the driving cylindrical surface 27A of the outer wheel 27, the width of the ring-shaped space in the diameter direction of the output shaft 12 is not constant in the circumferential direction of the output shaft 12. At least one intermediate roller among three intermediate rollers 31, 32, and 33, that is, the intermediate roller 33 in the first embodiment, is a movable roller which can move in the circumferential direction and the radius direction of the output shaft 12 in the ring-shaped space. As a result, all the intermediate rollers 31 to 33 can be pressed on the output shaft 12 and the outer wheel 27, thereby enhancing the rotation of the input shaft 11 and the outer wheel 27 by means of the intermediate rollers 31 to 33 and delivering the enhanced rotation to the output shaft 12.

Hereinafter, in the step-up gear 20 of the supercharger 10, the following elements are present. (A) a structure for pressing the intermediate rollers 31 to 33 to the output shaft 12 and the outer wheel 27, (B) a structure of the inner circumferential surface of the outer wheel 27, (C) a connection structure between the input shaft 11 and the outer wheel 27, (D) a support structure of the intermediate rollers 31 to 33, (E) an oil distribution structure, and (F) an assembly structure of the front housing 21 and the rear housing 22.

### (A) Structure for pressing the intermediate rollers 31 to 33 to the output shaft 12 and the outer wheel 27 (see FIGS. 1 to 3)

In the step-up gear 20, as shown in FIGS. 1 to 3, the outer wheel 27 is closely fitted onto the outer circumferential surfaces of all the intermediate rollers 31 to 33 in an elastic deformation state (in an elastic diameter expansion state), and the inner circumferential surface (the driving cylindrical surface 27A) of the outer wheel 27 is brought into contact with the outer circumferential surface (the driven cylindrical surface 12A) of the output shaft 12 in a tight tension state.

At this time, the movable roller 33 can move in the circumferential direction and the radius direction of the output shaft 12 within a guide groove 34 formed in the rear housing 22 and a carrier 50, to be described later.

In manufacturing the step-up gear 20, for example, by using pressing claws for grasping a workpiece on a worktable, three places in the circumferential direction of the outer wheel 27 are pressed by three pressing claws, the number of which is equal to the total number of the intermediate rollers 31 to 33. This elastically deforms the outer wheel 27 into a triangular shape. Accordingly, diameter contraction portions are formed at the positions corresponding to the pressing claws on the inner circumferential surface of the outer wheel 27. Diameter expansion portions are formed at the positions interposed between the diameter contraction portions adjacent to each other, and the intermediate rollers 31 to 33 are inserted into the diameter expansion portions. Thereafter, by releasing the pressing with the pressing claws, the outer wheel 27 can be closely fitted onto the outer circumferential surfaces of all the intermediate rollers 31 to 33.

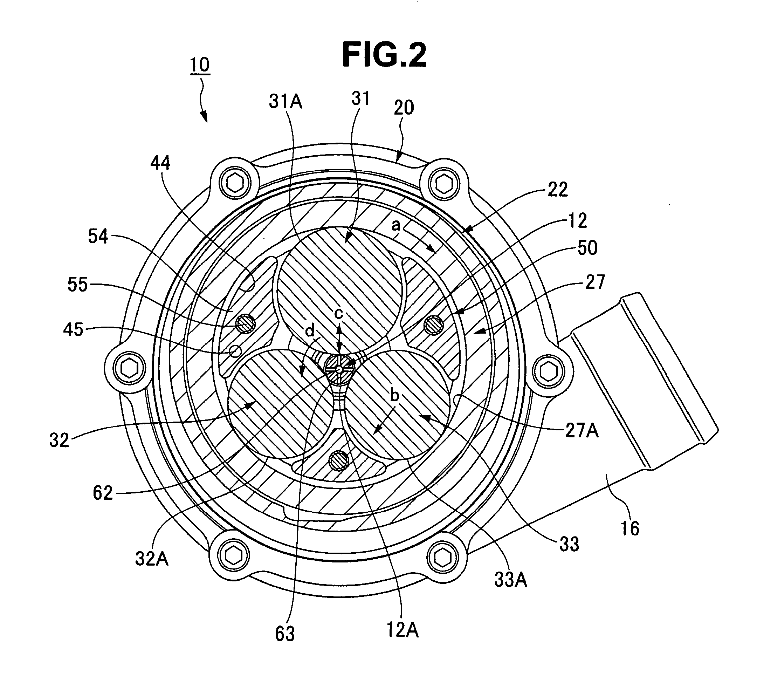

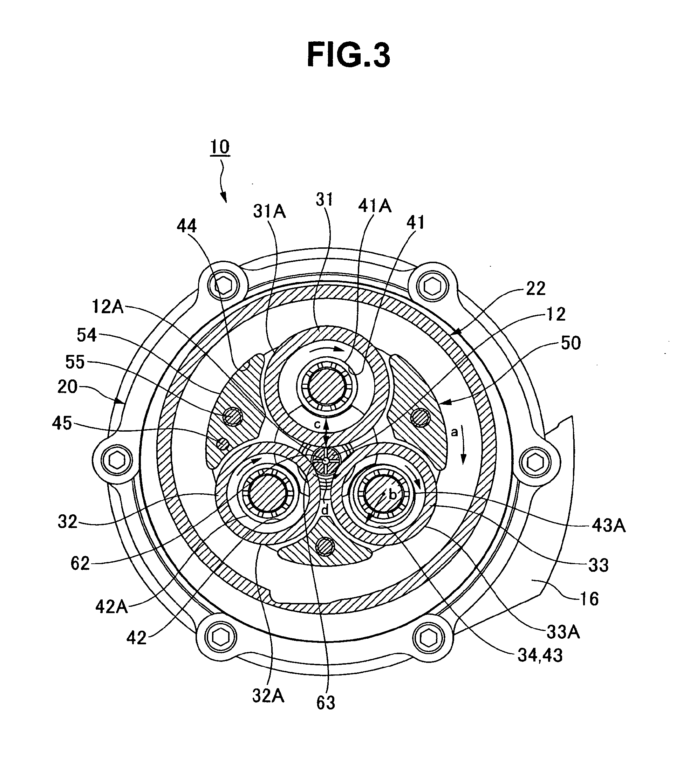

Therefore, the supercharger 10 can operate as described below (see FIGS. 2 and 3).
(1) When driving power is input from an engine to the pulley 13, the driving power is delivered to the outer wheel 27 through the input shaft 11. At this time, as described above, the outer wheel 27 and the output shaft 12 are eccentric from each other and the width of the ring-shaped space in the diameter direction of the output shaft 12 is not constant in the circumferential direction of the output shaft 12. Accordingly, when the outer wheel 27 supplied with a large amount of power by means of acceleration of the engine rotates in the direction a, the movable roller 33 moves in the direction b. The width of the ring-shaped space between the outer wheel 27 and the output shaft 12 is decreased and the wedge action acting on the movable roller 33 is increased. A large pressing force c is generated among the driven cylindrical surface 12A of the output shaft 12, the driving cylindrical surface 27A of the outer wheel 27, and the power-delivering cylindrical surfaces 31A to 33A of the intermediate rollers 31 to 33. The large pressing force c generates a large frictional force among the driven cylindrical surface 12A of the output shaft 12, the driving cylindrical surface 27A of the outer wheel 27, and the power-delivering cylindrical surfaces 31A to 33A of the intermediate rollers 31 to 33. Accordingly, the large driving power delivered to the outer wheel 27 is delivered to the output shaft 12 and thus the output shaft 12 rotates in the direction d at a high speed. The impeller 14 fixed to the output shaft 12 also rotates with the high-speed rotation of the output shaft 12. A large amount of air is thereby sucked through the suction port 16A of the compressor housing 16 and is supplied to the engine through the supply passage 16B and the scroll 16C.
(2) When the driving power delivered from the input shaft 11 to the outer wheel 27 is decreased due to deceleration of the engine, the movable roller 33 is displaced in the opposite direction of the direction b. The width of the ring-shaped space between the outer wheel 27 and the output shaft 12 is increased and the wedge action acting on the movable roller 33 is weakened. This reduces the pressing force c generated among the driven cylindrical surface 12A of the output shaft 12, the driving cylindrical surface 27A of the outer wheel 27, and the power-delivering cylindrical surfaces 31A to 33A of the intermediate rollers 31 to 33. Accordingly, the frictional force generated among the driven cylindrical surface 12A of the output shaft 12, the driving cylindrical surface 27A of the outer wheel 27, and the power-delivering cylindrical surfaces 31A to 33A of the intermediate rollers 31 to 33 is reduced. Output shaft 12 rotates in the direction d at low speed, and thus a necessary amount of air is supplied to the engine.

In addition, when the driving power from the engine becomes too small, the movable roller 33 collides with the other groove surface (stopper surface) of the guide groove 34 in the opposite direction of the direction b to regulate the lower limit of the pressing force c, thereby keeping the delivery of power to the output shaft 12 from the input shaft 11.

Therefore, according to the first embodiment, the following operational advantages can be obtained.
(a) The outer wheel 27 is closely fitted onto the outer circumferences of all the intermediate rollers 31 to 33, and the inner circumferential surface of the outer wheel 27 is brought into elastic contact with the outer circumferential surfaces of all the intermediate rollers 31 to 33. All the intermediate rollers 31 to 33 including the movable roller 33 are always pressed on the output shaft 12 and the outer wheel 27. Accordingly, when driving power is delivered to the outer wheel 27 from the input shaft 11, the movable roller 33 is pressed to move in a direction in which the width of the ring-shaped space is reduced between the output shaft 12 and the outer wheel 27. As a result, surface pressure between the driven cylindrical surface 12A of the output shaft 12 and the power-delivering cylindrical surfaces 31A to 33A of all the intermediate rollers 31 to 33, and surface pressure between the driving cylindrical surface 27A of the outer wheel 27 and the power-delivering cylindrical surfaces 31A to 33A of all the intermediate rollers 31 to 33 are enhanced, and the driving power delivered to the outer wheel 27 is delivered to the output shaft 12. As the rotation is enhanced and the driving power is enhanced, the movable roller 33 is pressed to move in the direction in which the width of the ring-shaped space is reduced and to enhance the surface pressures, thereby delivering the driving power without slip. When the high-speed rotation is reduced to the low-speed rotation, the movable roller 33 moves in the direction in which the width of the ring-shaped space is increased and reduces the surface pressures. Accordingly, it is possible to suppress the drive loss and to elongate the fatigue life of the output shaft, the movable roller, and the outer wheel.
(b) The movable roller 33 can move within the guide groove 34. Accordingly, in the guide groove 34, a groove end where the width of the ring-shaped space is increased serves as a movement stopper of the movable roller 33. When high-speed rotation is reduced to low-speed rotation, the moving end of the movable roller 33 is regulated. The minimum surface pressure between the driven cylindrical surface 12A of the output shaft 12 and the power-delivering cylindrical surfaces 31A to 33A of all the intermediate rollers 31 to 33, and the minimum surface pressure between the driving cylindrical surface 27A of the outer wheel 27 and the power-delivering cylindrical surfaces 31A to 33A of all the intermediate rollers 31 to 33 are maintained, thereby delivering the driving power.
   Here, the reason for regulating the moving end of the movable roller 33 by the use of the stopper portion of the groove end to maintain the minimum surface pressure is as follows. When the surface pressure between the contacting surfaces supplied with a traction oil is not greater than a predetermined surface pressure (substantially 1 Gpa) in view of the characteristic of the traction oil circulating in the step-up gear 20, it is not possible to obtain a desired traction coefficient. Thus, it is necessary to keep the minimum surface pressure greater than the predetermined surface pressure.
(c) Assembling the supercharger 10, in particular, the step-up gear 20, is accomplished by pressing plural positions in the circumferential direction on the outer circumference of the outer wheel 27 by the use of the same number of pressing claws as the intermediate rollers 31 to 33, forming the diameter contraction portions at the positions on the inner circumference of the outer wheel 27 corresponding to the pressing claws, forming the diameter expansion portions at the positions interposed between the adjacent diameter contraction portions, and inserting the intermediate rollers 31 to 33 into the diameter expansion portions. In this way, it is possible to simply closely fit the outer wheel 27 onto the outer circumferences of all the intermediate rollers 31 to 33 in a simple manner.

### (B) Structure of the inner circumferential surface of the outer wheel 27 (see FIGS. 1, 8, and 9)

In the step-up gear 20, as shown in FIG. 1, two sets of convex portions 27B and 27B are provided on the inner circumferential surface of the outer wheel 27. Each convex portion 27B extends in the circumferential direction of the inner circumference of the outer wheel 27 to form a ring shape.

In the step-up gear 20, the tip of the two sets of convex portions 27B and 27B of the outer wheel 27 serve as the driving cylindrical surface 27A. The convex portions 27B are brought into contact with a part in the width direction of the outer circumferential surfaces (the power-delivering cylindrical surface 31A to 33A,) of the intermediate rollers 31 to 33. At this time, in the step-up gear 20, the outer circumferential surface, (the driven cylindrical surface 12A) of the output shaft 12 is brought into contact with the entire surfaces in the width direction of the outer circumferential surfaces, (,the power-delivering cylindrical surfaces 31A to 33A,) of the intermediate rollers 31 to 33.

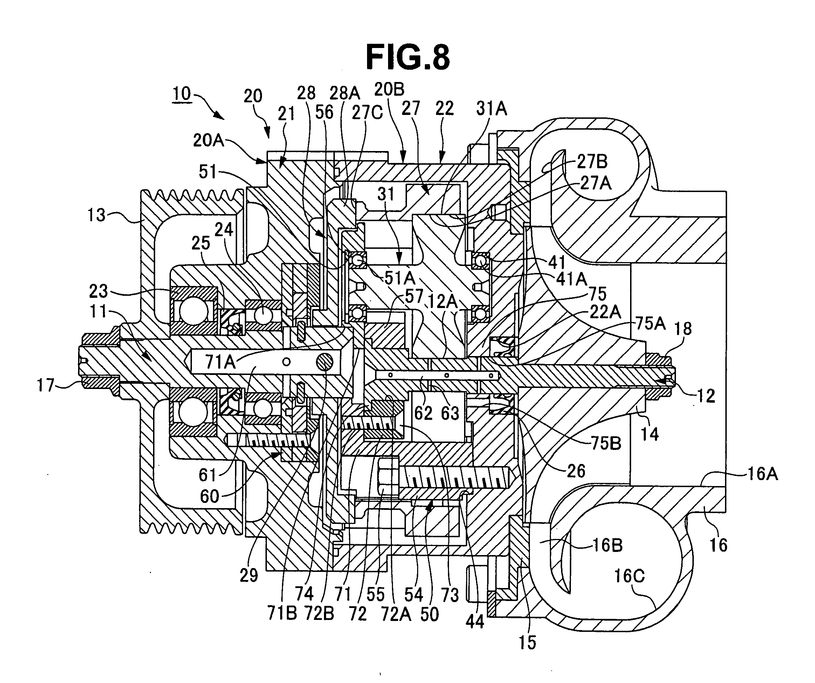

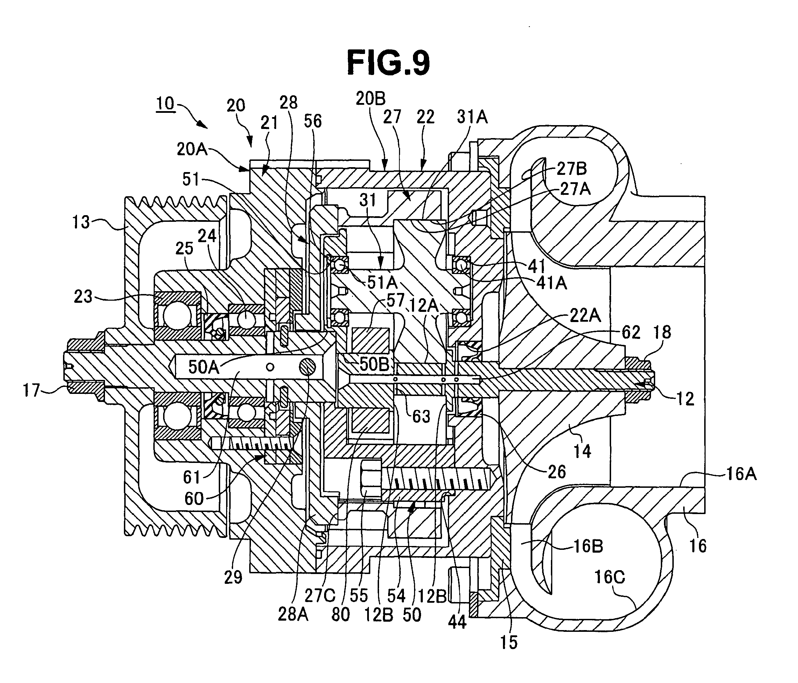

In the step-up gear 20, as shown in FIGS. 8 and 9, the convex portions 27B provided on the inner circumferential surface of the outer wheel 27 may be replaced with a set of convex portion 27B having a trapezoidal shape, or may be replaced with three or more sets of convex portions 27B.

Accordingly, according to the first embodiment of the present invention, the following advantages can be obtained.

The convex portion 27B provided in the circumferential surface on the inner circumferential surface of the outer wheel 27 is brought into contact with a part in the width direction of the outer circumferential surfaces of the intermediate rollers 31 to 33. The output shaft 12 comes in contact with the entire surfaces in the width direction of the outer circumferential surfaces of the intermediate rollers 31 to 33. The allowable slip-free delivery torque to the output shaft 12 from the input shaft 11 is restricted to the smaller one of the delivery torque between the outer wheel 27 and the intermediate rollers 31 to 33, and the delivery torque between the intermediate rollers 31 to 33 and the output shaft 12, in proportion to a pressing force and a frictional coefficient between the delivery members, between the outer wheel 27 and the intermediate rollers 31 to 33, or between the intermediate rollers 31 to 33 and the output shaft 12. The pressing forces are equal to each other by the balance of forces between the outer wheel 27 and the intermediate rollers 31 to 33 and between the intermediate rollers 31 to 33 and the output shaft 12. Paying attention to the surface pressures, by providing the convex portions 27B in the outer wheel 27 having a small curvature to reduce the contact width between the outer wheel 27 and the intermediate rollers 31 to 33, the surface pressures therebetween are allowed to approach the surface pressure between the intermediate rollers 31 to 33 and the output shaft 12. Accordingly, the pressing forces and the surface pressures approach each other between the outer wheel 27 and the intermediate rollers 31 to 33 and between the intermediate rollers 31 to 33 and the output shaft 12. The delivery torque between the outer wheel 27 and the intermediate rollers 31 to 33 is allowed to be substantially equal to the delivery torque between the intermediate rollers 31 to 33 and the output shaft 12. As a result, the allowable delivery torque to the output shaft 12 from the input shaft 11 can be secured and the durability can be enhanced, without unnecessarily increasing the surface pressure between the intermediate rollers 31 to 33 and the output shaft 12.

### (C) Connection structure between the input shaft 11 and the outer wheel 27 (see FIGS. 1 and 4 to 6C)

In the step-up gear 20, as shown in FIGS. 1, 4, 5A, and 5B, the input shaft 11 and the outer wheel 27 are connected to each other through a drive member 28. In the step-up gear 20, the input shaft 11 is connected to the drive member 28 so as to be slidable in an x axis direction (a direction perpendicular to the center axis of the input shaft 11) and the drive member 28 is connected to the outer wheel 27 so as to slidable in a y axis direction (a direction perpendicular to the center axis of the input shaft 11) perpendicular to the x axis direction.

Specifically, the input shaft 11 and the drive member 28 are coupled to each other by the use of a pin 29 extending in the x axis direction. The intermediate portion of the pin 29 is inserted into a pin hole formed in the drive member 28 and both ends of the pin 29 are inserted into pin holes formed in the input shaft 11 with a gap therebetween. Thus, the input shaft 11 is connected to the drive member 28 so as to be slidable in the x axis direction. The drive member 28 extends from the diameter in the y axis of the input shaft 11, and both ends 28A of the drive member 28 are inserted into engagement grooves 27c formed concave at two positions of the diameter of the outer wheel 27. As a result, the drive member 28 is connected to the outer wheel 27 so as to be slidable in the y axis direction.

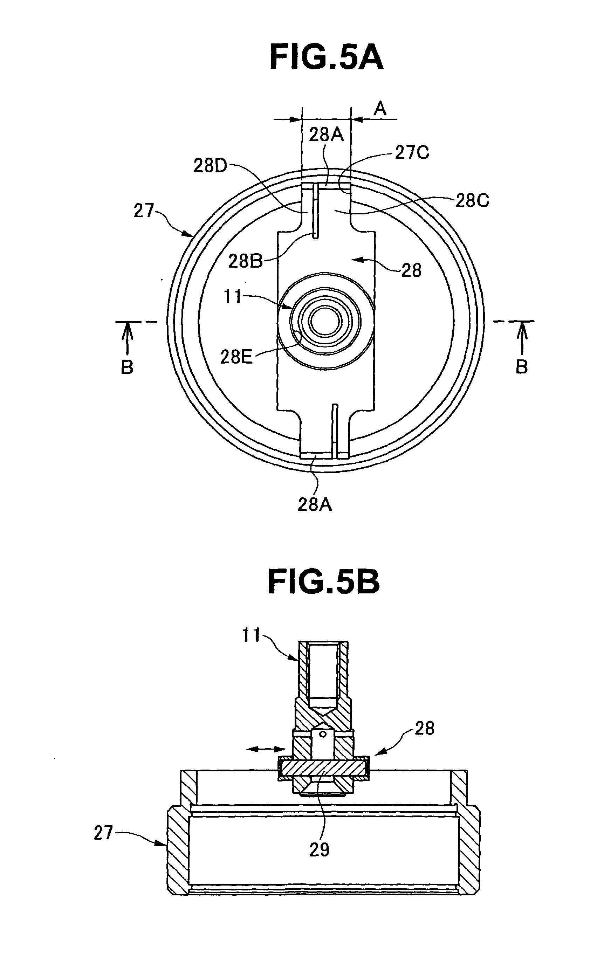

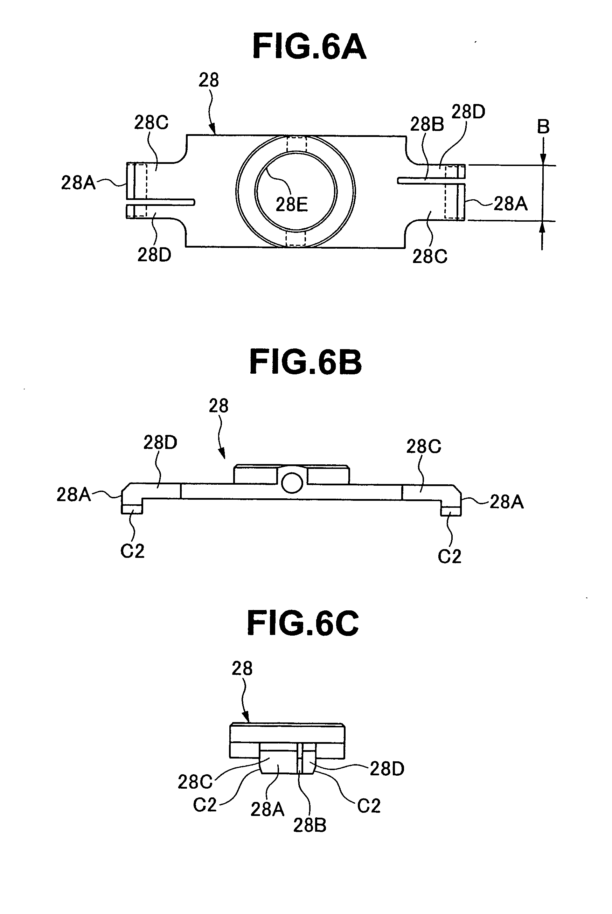

In the step-up gear 20, both ends 28A of the drive member 28 have a width B (see FIG. 6A) greater than the groove width A (see FIG. 5A) of the engagement groove 27C in the free state before both ends are inserted into the engagement grooves 27C of the outer wheel 27. Both ends 28A of the drive member 28 have a slit 28B formed in the y axis direction which is opened to the outer surface of the ends 28A.

In the step-up gear 20, each end 28A of the drive member 28 has two division portions 28C and 28D divided by the slit 28B. The driving division portion 28C contacting the groove wall of the engagement groove 27C of the outer wheel 27 in the rotation torque delivery direction of the input shaft 11 has a width greater than that of the driven division portion 28D opposite thereto.

In the step-up gear 20, the input shaft 11 is connected to the drive member 28 to be rotatable about the x axis, and the drive member 28 is connected to the outer wheel 27 to be rotatable about the y axis.

Specifically, by inserting the input shaft 11 into a connection hole 28E formed in the drive member 28 with a margin, and coupling the input shaft 11 to the drive member 28 by the use of the pin 29, the input shaft 11 is connected to the drive member 28 to be rotatable about the x axis. By inserting the ends 28A of the drive member 28, which has the slit 28B so as to expand and contract the width thereof, into the engagement grooves 27C of the outer wheel 27, the drive member 28 is connected to the outer wheel 27 to be rotatable about the y axis. When both lateral surfaces of each end 28A of the drive member 28 contacting the groove walls of the engagement grooves 27C of the outer wheel 27 are formed convex, the drive member 28 can more smoothly rotate about the y axis with respect to the outer wheel 27.

Therefore, according to the first embodiment described above, the following advantages can be obtained.
(a) The input shaft 11 is connected to the drive member 28 to be slidable in the x axis direction, and the drive member 28 is connected to the outer wheel 27 to be slidable in the y axis direction perpendicular to the x axis direction. Accordingly, since the connection structure includes three components of the input shaft 11, the drive member 28, and the outer wheel 27, the components can be easily machined. The input shaft 11 and the outer wheel 27 slide with respect to each other in two directions perpendicular to each other (x axis direction and y axis direction) with the drive member 28 therebetween without any gap. The positional deviation between the center axes of the input shaft 11 and the outer wheel 27 can be absorbed, thereby not generating abnormal noise (collision noise) at the time of switching the acceleration and the deceleration of the input shaft 11.
(b) The input shaft 11 is connected to the drive member 28 to be rotatable about the x axis n, and the drive member 28 is connected to the outer wheel 27 to be rotatable about the y axis. Accordingly, angular deviation between the center axes of the input shaft 11 and the outer wheel 27 can be obtained.
(c) The input shaft 11 and the drive member 28 are coupled to each other by the use of the pin 29 extending in the x axis direction. The drive member 28 extends on the diameter along the y axis direction of the input shaft 11. Both ends 28A of the drive member 28 are inserted into the engagement grooves 27C formed concave at two positions on the diameter of the outer wheel 27. Accordingly, as described in (a), the input shaft 11 and the outer wheel 27 can slide in two directions perpendicular to each other (x axis direction and y axis direction) with respect to each other through the drive member 28 without any gap.
(d) The input shaft 11 is inserted into the connection hole 28E formed in the drive member 28 with a margin, and the input shaft 11 and the drive member 28 are coupled to each other at the position of insertion with the pin. Accordingly, as described in (b), the input shaft 11 can be connected to the drive member 28 to be rotatable about the x axis.
(e) Both ends 28A of the drive member 28 have a width greater than the groove width of the engagement groove 27C in the free state before both ends are inserted into the engagement grooves 27C of the outer wheel 27, and have a slit 28B formed in the y axis direction which is opened to the outer surface of the ends. Accordingly, even when the machining precision for the connection portion between the drive member 28 and the outer wheel 27 is relatively poor, the width of the ends of the drive member 28 fitted into the engagement groove 27C of the outer wheel 27 can be adjusted through the expansion and contraction of the slits 28B. Thus, the ends of the drive member 28 can be completely inserted into the engagement grooves 27C of the outer wheel 27 without a gap so as to be slidable as described in (a), thereby reducing the cost.
(f) Each end 28A of the drive member 28 has two division portions 28C and 28D divided by the slit 28B. The driving division portion 28C contacting the groove wall of the engagement groove 27C of the outer wheel 27 in the rotation torque delivery direction of the input shaft 11 has a width greater than that of the driven division portion 28D opposite thereto. Accordingly, even when the slits 28B are formed in the drive member 28, it is possible to satisfactorily deliver the rotation torque of the input shaft 11 to the outer wheel 27 through the drive member 28.
(g) In the step-up gear 20, the outer wheel 27 is closely fitted onto the outer circumferences of all the intermediate rollers 31 to 33. The outer wheel 27 rotates while the inner circumferential surface of the outer wheel 27 is brought into elastic contact with the outer circumferential surfaces of all the intermediate rollers 31 to 33. Accordingly, the center axis of the outer wheel 27 is deviated from the center axis of the input shaft 11 with the rotation thereof, but the deviation between the center axes can be absorbed completely as described in (a).

### (D) Support structure of the intermediate rollers 31 to 33 (see FIGS. 1 to 3 and FIGS. 7A to 7C)

In the step-up gear 20, when the carrier 50 is fitted into the rear housing 22, bearings 41A, 42A, and 43A fitted to spindles of one ends of the intermediate rollers 31 to 33 are supported by bearing holes 41, 42, and 43 formed in the rear housing 22. Bearings 51A, 52A, and 53A fitted to spindles of the other ends of are supported by bearing holes 51, 52, and 53 formed in the carrier 50.

In the course of machining the rear housing 22 and the carrier 50, the bearing holes 51 to 53 of the carrier 50 and the bearing holes 41 to 43 of the rear housing 22 corresponding thereto are concentrically formed with a single tool such that the carrier 50 is fixed to the rear housing 22 by means of positioning means (the counter bore portions 44 and the knock pins 45 of the rear housing 22 in the first embodiment). At least, the bearing holes 51 to 53 are formed as through-holes.

The above-mentioned fixing structure of the carrier 50 to the rear housing 22 is accomplished by faucet-connecting the outer circumferences (or inner circumferences) of three leg portions of the carrier 50 to the counter bore portions 44 of the rear housing 22, coupling the leg portions 54 to the rear housing 22 with bolts 55, and coupling the carrier 50 to the rear housing 22 with one or more (or two or more) knock pins 45.

The bearing holes 43 and 53 for supporting the bearings 41A and 53A fitted to both end spindles of the movable roller 33 are circular holes (or longitudinal holes) having a diameter greater than that of the bearings 43A and 53A, thereby forming the guide groove 34.

The rear housing 22 has at the center thereof a hole 22A through which the intermediate portion of the output shaft 12 and into which the oil seal 26 is inserted. The carrier 50 has at the center thereof, (a coating portion 57) a hole 50A through which the end of the input shaft 11 is inserted and a hole 50B through which the end of the output shaft 12 is inserted. The two holes are eccentric from each other.

Therefore, in the process of fitting the output shaft 12 and the intermediate rollers 31 to 33 into the rear housing 22 and the carrier 50, in the state that the intermediate portion of the output shaft 12 is inserted through the hole 22A of the rear housing 22 and the power-delivering cylindrical surfaces 31A to 33A of the intermediate rollers 31 to 33 are brought into contact with the driven cylindrical surface 12A of the output shaft 12, the bearings 41A to 43A fitted to the spindles of one ends of the intermediate rollers 31 to 33 are inserted into the bearing holes 41 to 43 of the rear housing 22. Thereafter, the hole 50B of the carrier 50 fixed to the rear housing 22 is fitted to the end of the output shaft 12. The bearing holes 51 to 53 of the carrier 50 are fitted to the bearings 51A to 53A fitted to the spindles of the other ends of the intermediate rollers 31 to 33. Then, the rear housing 22 and the carrier 50 are fixed to each other with the bolts 55 by the use of the positioning means (the counter bore portions 44 and the knock pins 45). The thrust direction and position of the intermediate rollers 31 to 33 are supported by the bearing holes 51 to 53, which are insertion holes of the carrier 50, and are regulated by means of collision of a stopper wheel 56 fitted into a ring-shaped groove formed in the inner circumferences of the bearing holes 51 to 53 with an inner wheel of the bearings 51A to 53A.

When the output shaft 12 and the intermediate rollers 31 to 33 are fitted into the rear housing 22 and the carrier 50, guards 12B and 12B formed at both ends of the driven cylindrical surface 12A of the output shaft 12 sandwich both end surfaces of the power-delivering cylindrical surfaces 31A to 33A of the intermediate rollers 31 to 33, thereby regulating the thrust direction and position of the output shaft 12.

Therefore, according to the first embodiment described above, the following advantages can be obtained.
(a) The carrier 50 is fixed to the rear housing 22 by the use of the positioning means (the counter bore portions 44 and the knock pins 45). The bearing holes 51, 52, and 53 of the carrier 50 and the bearing holes 41, 42, and 43 of the rear housing 22 are formed concentrically, and the bearing holes 51 to 53 are formed as through-holes. Accordingly, where the carrier 50 and the rear housing 22 are integrally coupled to each other, the bearing holes 41 to 43 and 51 to 53 can be formed concentrically with a single tool. The coupled state during machining can reappear due to the existence of the positioning means (the counter bore portions 44 and the knock pines 45) even after the intermediate rollers 31 to 33 are fitted to the bearing holes 41 to 43 and 51 to 53 of the carrier 50 and the rear housing 22. Therefore, in the step-up gear 20 after assembly, the bearing holes 41 to 43 and 51 to 53 formed in the carrier 50 and the rear housing 22, respectively, exhibit excellent concentricity. In addition, the parallelism between the intermediate rollers 31 to 33 and the outer wheel 27 or the output shaft 12 can be easily secured. The parallelism between the intermediate rollers 31 to 33 can be easily secured, thereby accomplishing enhancement in mechanical efficiency and life time of the step-up gear 20.
(b) The carrier 50 can be repeatedly concentrically coupled to the rear housing 22, by faucet-connecting the leg portions 54 of the carrier 50 to the counter bore portions 44 of the rear housing 22. In addition, the carrier 50 and the rear housing 22 can be repeatedly positioned at the same angular position around the center axes thereof, by coupling the carrier 50 and the rear housing 22 to each other by the use of the knock pin 45. Accordingly, the integral assembly structure during machining in which the bearing holes 41 to 43 and 51 to 53 are concentrically formed in the carrier 50 and the rear housing 22 can satisfactorily reappear even after the intermediate rollers 31 to 33 are fitted to the bearing holes 41 to 41 and 51 to 53 of the carrier 50 and the rear housing 22.
(c) Since the thrust direction and position of the intermediate rollers supported by the bearing holes 51 to 53 which are formed as through-holes are regulated by the stopper wheel 56 fitted onto the inner circumferences of the through-holes, it is possible to improve the assembling workability of fitting the intermediate rollers 31 to 33 to the carrier 50 and the rear housing 22.

### (E) Oil distribution structure (see FIG. 1)

The step-up gear 20 has an oil pump 60 for circulating traction oil therein. The oil pump 60 includes a vane pump in which a plurality of vanes is provided on the outer circumference of a rotor fixed to the input shaft 11 around the input axis 11 in the front housing 21. The vanes are surrounded with a base plate, a side plate, and a cam ring. In the first embodiment, the oil pump 60 is driven by the input shaft 11. However, the oil pump 60 may be driven by the output shaft 12.

The traction oil discharged from the oil pump 60 lubricates and cools the bearing 24 and the oil seal 25 around the input shaft 11. The oil flows from a flow passage 61, which is formed in the input shaft 11 in the diameter direction and the axis direction thereof and is opened at the shaft end surface inserted into the hole 50A of the carrier 50, to a flow passage 62. Flow passage 62 is formed from the shaft end surface of the output shaft 12 inserted into the hole 50B of the carrier 50 in the axis direction thereof. The oil flows toward the outer circumference from a distribution passage 63, which is formed in the diameter direction of the output shaft 12 to intersect the flow passage 62, by means of centrifugal forces corresponding to the rotation of the output shaft 12. The oil flowing out from the distribution passage 63 opened to the driven cylindrical surface 12A of the output shaft 12 lubricates and cools the driven cylindrical surface 12A of the output shaft 12 and the power-delivering cylindrical surfaces 31A to 33A of the intermediate rollers 31 to 33. The oil flowing out from the distribution passage 63 close to both ends of the driven cylindrical surface 12A lubricates and cools the thrust contact portion between both guards 12B of the output shaft 12 and the power-delivering cylindrical surfaces 31A to 33A of the intermediate rollers 31 to 33. The oil flowing out of the distribution passage 63 intersecting the closed end of the flow passage 62 lubricates and cools the oil seal 26 around the output shaft 12. The oil discharged to the outer circumference of the output shaft 12 flows again through the ring-shaped space between the output shaft 12 and the outer wheel 27, lubricates and cools the bearings 41A to 43A and the bearings 51A to 53A of the intermediate rollers 31 to 33 and the driving cylindrical surface 27A of the outer wheel 27, and then returns to the oil pump 60.

In the step-up gear 20, the input shaft 11 and the output shaft 12 are disposed eccentric from each other. The connection portion between the flow passage 61 of the input shaft 11 and the flow passage 62 of the output shaft 12 is covered with a center coating portion 57 having the holes 50A and 50B through which the end of the input shaft 11 and the end of the output shaft 12 are inserted in the eccentric state, in the carrier 50 supported by the rear housing 22. The oil flowing out of the flow passage 61 of the input shaft 11 is prevented from flowing outwards by the coating portion 57 to reduce the leakage thereof and is guided to the flow passage 62 of the output shaft 12.

In the step-up gear 20, the oil can be allowed to flow in the gap between the outer circumference of the end of the input shaft 11 and the inner circumference of the hole 50A of the coating portion 57, thereby forming an oil film damper. By allowing a different-diameter stepped surface formed on the outer circumference of the end of the input shaft 11 and a different-diameter stepped surface formed on the inner circumference of the hole 50A of the coating portion 57 to meet each other to provide a labyrinth effect, it is possible to reinforce the outward blocking effect of the coating portion 57.

In the step-up gear 20, the oil can be allowed to flow in the gap between the outer circumference of the end of the output shaft 12 and the inner circumference of the hole 50B of the coating portion 57, thereby forming an oil film damper. By allowing a different-diameter stepped surface formed on the outer circumference of the end of the output shaft 12 and a different-diameter stepped surface formed on the inner circumference of the hole 50B of the coating portion 57 to meet each other to provide a labyrinth effect, it is possible to reinforce the outward blocking effect of the coating portion 57.

Therefore, according to the first embodiment described above, the following advantages can be obtained.
(a) The connection portion, which serves as a circulation path of the traction oil, between the flow passage 61 of the input shaft 11 and the flow passage 62 of the output shaft 12, is covered with the coating portion 57. Accordingly, the oil circulation path extending from the input shaft 11 to the output shaft 12 which are eccentric from each other can be constructed simply.
(b) Since the coating portion 57 forms the oil film damper between the input shaft 11 and the output shaft 12, it is possible to reduce the vibration of the input shaft 11 and the output shaft 12 by the use of the damping effect of the oil film damper.

### (F) Assembly structure of the front housing 21 and the rear housing 22

In the step-up gear 20, first, a front assembly 20A in which the input shaft 11 is fitted to the front housing 21 and a rear assembly 20B in which the intermediate rollers 31 to 33, the output shaft 12, and the outer wheel 27 are fitted to the rear housing 22, are prepared. The input shaft 11 of the front assembly 20A and the outer wheel 27 of the rear assembly 20B are allowed to engage with each other without a gap in the rotation direction, in the process of fitting and fixing the front housing 21 and the rear housing 22 to each other.

That is, the step-up gear 20 is assembled in the following procedure.
(1) The front assembly 20A is assembled. The input shaft 11 is fitted to the front housing 21 with the bearings 23 and 24 and the oil seal 25 therebetween. The pulley 13 is fixed to a protruded end of the input shaft 11, the oil pump 60 is built around the input shaft 11 in the front housing 21, and the drive member 28 is coupled to the end of the input shaft 11 in the front housing 21 in a pin coupling manner.
(2) The rear assembly 20B is assembled. The end of the output shaft 12 is inserted into the hole 50B of the carrier 50. The one-end spindles of the intermediate rollers 31 to 33 are inserted into the bearing holes 51 to 53 of the carrier 50 through the bearings 51A to 53A. By using the pressing claws of the worktable described above, the outer wheel 27 is closely fitted onto the outer circumferences of all the intermediate rollers 31 to 33 in a tight tension state. The carrier 50 is fixed to the rear housing 22, and the output shaft 12 is inserted into the hole 22A of the rear housing 22 with the oil seal 26 therebetween.
   The impeller 14 is fixed to the end of the output shaft 12 protruded from the rear housing 22, and the center plate 15 and the compressor housing 16 are faucet-connected to the rear housing 22.
(3) In the process of relative movement for faucet-connecting the front housing 21 and the rear housing 22 to each other, both ends 28A of the drive member 28 of the front assembly 20A are inserted into the engagement grooves 27C formed concave at two positions on the diameter of the outer wheel 27 of the rear assembly 20B in the relative movement direction.

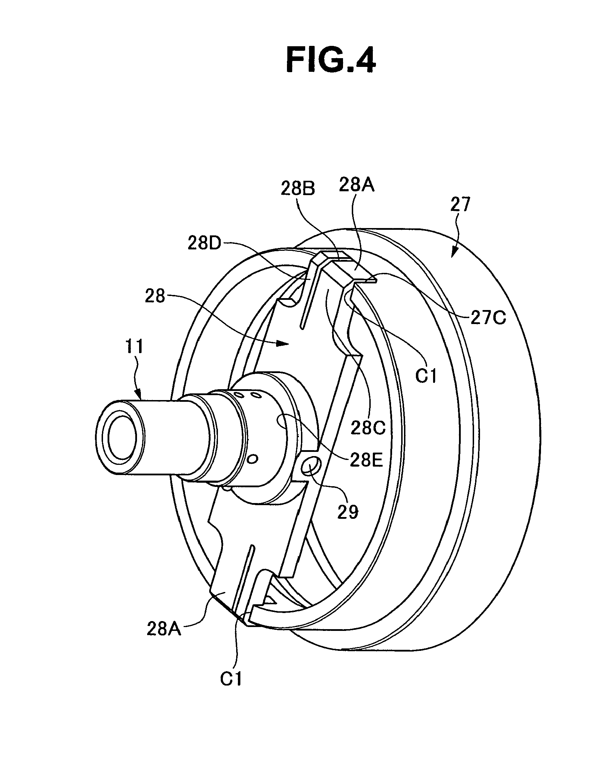

When inserting both ends 28A of the drive member 28 into the engagement grooves 27C of the outer wheel 27, a chamfered portion C1 is formed in the opening portions of the opposite groove walls of the engagement grooves 27C (FIG. 4). A chamfered portion C2 is formed in the corner portions of both ends 28A (FIGS. 6B and 6C). The chamfered portions can smoothly guide the insertion.

Therefore, according to the first embodiment described above, the following advantages can be obtained.
(a) In the process of coupling the front housing 21 and the rear housing 22 to each other, since the input shaft 11 of the front assembly 20A and the outer wheel 27 of the rear assembly 20B are coupled to each other without any gap in the rotation direction thereof, the assembling workability is excellent. At this time, the input shaft 11 and the outer wheel 27 are coupled to each other without a gap in the rotation direction, thereby not generating abnormal noise (collision noise) during switching the acceleration and deceleration of the input shaft 11.
(b) By inserting both ends 28A of the drive member 28 connected to the input shaft 11 into the engagement grooves 27C formed concave at two positions on the diameter of the outer wheel 27, the input shaft 11 and the outer wheel 27 can be easily coupled to each other without a gap in the rotation direction thereof.
(c) When the outer wheel 27 is closely fitted to the outer circumferences of all the intermediate rollers 31 to 33, the outer wheel 27 and the intermediate rollers 31 to 33 are fitted in advance into the rear housing 22 along with the output shaft 12 to form the rear assembly 20B. Accordingly, the close fitting structure does not make the assembling workability of the front assembly 20A and the rear assembly 20B difficult.

### (Second Embodiment) (see FIG. 8)

A second embodiment of the present invention is different from the first embodiment, as shown in FIG. 8, in that the carrier 50 is divided into a main body part 71 and a thrust support part 72. A hole 71A through which the end of the input shaft 11 is inserted is formed at the center of the main body part 71. A hole 72A through which the end of the output shaft 12 is inserted is formed in the thrust support part 72. The main body part 71 and the thrust support part 72 are coupled to each other with a fixing screw 73. The hole 71A and the hole 72A communicate with each other through a through-hole 71B of the main body part 71.

In the carrier 50, the main body part 71 and the thrust support part 72 constitute the coating portion 57, and cover the connection portion between the flow passage 61 of the input shaft 11 and the flow passage 62 of the output shaft 12.

In the carrier 50, a flange portion 74 formed at the end of the output shaft 12 is inserted between a lateral surface of the main body part 71 and a thrust support surface 72B, including a different-diameter stepped surface formed in the hole 72A of the thrust support part 72, thereby supporting the output shaft 12 in a thrust manner. At this time, the output shaft 12 does not have the guards 12B.

In the output shaft 12, a part of the distribution passage 63 intersecting the flow passage 62 is directed to the opening surface of the thrust support part 72 so as to allow the oil to flow in the gap between the outer circumference of the end of the output shaft 12 and the inner circumference of the hole of the thrust support part 72. This forms an oil film damper.

The rear housing 22 includes an axial support portion 75 formed in the hole 22A into which the oil seal 26 is inserted. A hole 75A through which the intermediate portion of the output shaft 12 is inserted is formed in the axial support portion 75. In the output shaft 12, a part of the distribution passage 63 intersecting the flow passage 62 is directed to the hole surface of the axial support portion 75 so as to allow the oil to flow in the gap between the outer circumference of the intermediate portion of the output shaft 12 and the inner circumference of the hole of the axial support portion 75, thereby forming an oil film damper. Reference numeral 75B denotes an oil return passage from the oil seal 26.

Therefore, according to the second embodiment described above, the following advantages can be obtained.
(a) The connection portion, which constitutes the circulation path of the traction oil, between flow passage 61 of the input shaft 11 and the flow passage 62 of the output shaft 12, are covered with the coating portion 57. Accordingly, the oil circulation path extending between the input shaft 11 to the output shaft 12 which are eccentric from each other can be easily constructed.
(b) Since the flange portion 74 of the output shaft 12 is supported by the thrust support surface 72B of the coating portion 57 in a thrust supporting manner, the output shaft 12 can be easily positioned in the thrust direction, thereby suppressing the vibration of the output shaft 12 in the thrust direction.
(c) Since the oil film damper is formed between each of the coating portion 57 and the axial support portion 75 and the output shaft 12, the vibration of the output shaft 12 can be reduced by the use of the damping effect of the oil film dampers.

### (Third Embodiment) (see FIG. 9)

A third embodiment of the present invention is substantially different from the first embodiment, in that a flywheel 80 is fixed to the output shaft 12 on the side opposite to the impeller 14 through a contact portion with the intermediate rollers 31 to 33.

Therefore, according to the third embodiment described above, the following advantage can be obtained.
(a) The vibration of the output shaft 12 can be suppressed by the flywheel 80 which rotates with the same number of rotation as the impeller 14 on the output shaft 12.
(b) Since the impeller 14 and the flywheel 80 are fitted to the output shaft 12, the balance in a fully assembled state where the impeller 14 is fitted to the output shaft 12 can be easily kept by cutting out the flywheel 80 in the circumferential direction or the axis direction.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, it is not necessary that the input shaft 11, the outer wheel 27, and the output shaft 12 are eccentric. It is also not necessary that the width, in the diameter direction of the output shaft 12, of the ring-shaped space between the driven cylindrical surface which is the output circumferential surface of the output shaft and the driving cylindrical surface which is the inner circumferential surface of the outer wheel is not constant.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A supercharger comprising a step-up gear in which rotation of an input shaft is enhanced with the step-up gear and delivered to an output shaft, and an impeller is disposed on the output shaft,
the step-up gear comprising:
an outer wheel which rotates with the input shaft and is eccentric from the output shaft;
a plurality of intermediate rollers which are disposed in a ring-shaped space of which the width in the diameter direction of the output shaft between a driven cylindrical surface which is the outer circumferential surface of the output shaft and a driving cylindrical surface which is the inner circumferential surface of the outer wheel is not constant in the circumferential direction of the output shaft, and each of the outer circumferential surfaces of a plurality of intermediate rollers serves as a power-delivering cylindrical surface coming in frictional contact with the driven cylindrical surface and the driving cylindrical surface,
at least one of the intermediate rollers being a movable roller which can move in the circumferential surface and the radius direction of the output shaft,
wherein the outer wheel is closely fitted onto the outer circumferences of all the intermediate rollers, and the inner circumferential surface of the outer wheel is brought into elastic contact with the outer circumferential surfaces of all the intermediate rollers.

2. The supercharger according to Claim 1, wherein the movable roller can move in the circumferential direction and the radius direction of the output shaft within a guide groove formed in a housing of the step-up gear.

3. A method of manufacturing the supercharger according to Claim 1 or 2, the method comprising:
pressing a plurality of positions in the circumferential direction of the outer circumferential surface of the outer wheel by the use of the same number of pressing claws as the intermediate rollers;
forming diameter contraction portions at positions on the inner circumferential surface of the outer wheel corresponding to the pressing claws, and forming diameter expansion portions at positions interposed between the adjacent diameter contraction portions; and
closely fitting the outer wheel to the outer circumferences of all the intermediate rollers.

4. A supercharger comprising a step-up gear in which rotation of an input shaft is enhanced with the step-up gear and delivered to an output shaft, and an impeller is disposed on the output shaft,
the step-up gear comprising:
an outer wheel which rotates with the input shaft;
a plurality of intermediate rollers which are disposed in a ring-shaped space between a driven cylindrical surface which is the outer circumferential surface of the output shaft and a driving cylindrical surface which is the inner circumferential surface of the outer wheel, and each of the outer circumferential surfaces of a plurality of intermediate rollers serves as a power-delivering cylindrical surface coming in frictional contact with the driven cylindrical surface and the driving cylindrical surface,
one end of the respective intermediate rollers being supported by a bearing hole formed in a housing of the step-up gear and the other end being supported by a bearing hole formed in a carrier which is fitted into the housing,
wherein the carrier is fixed to the housing by the use of a positioning member, the bearing holes of the carrier and the bearing holes of the housing are concentrically formed, and the bearing holes of at least one side are through-holes.

5. The supercharger according to Claim 4, wherein leg portions of the carrier are faucet-connected to counter bore portions of the housing, and the carrier and the housing are coupled to each other by the use of knock pins in a pin coupling manner.

6. The supercharger according to Claim 4 or 5, wherein thrust direction and position of the intermediate rollers supported by the bearing holes which are the through-holes are regulated by stopper wheels fixed to the inner circumferential surfaces of the through-holes.

7. The supercharger according to any one of Claims 4 to 6, wherein the plurality of intermediate rollers is disposed in a ring-shaped space of which the width in the diameter direction of the output shaft between a driven cylindrical surface, which is the outer circumferential surface of the output shaft, and a driving cylindrical surface, which is the inner circumferential surface of the outer wheel, is not constant in the circumferential direction of the output shaft, the outer wheel being closely fitted onto the outer circumferences of all the intermediate rollers, and the inner circumferential surface of the outer wheel is brought into elastic contact with the outer circumferential surfaces of all the intermediate rollers.
